# EUROPEAN PATENT APPLICATION

(11) **EP 4 761 139 A1**
(43) Date of publication of application: **17.06.2026**
(21) Application number: 24219882.8
(22) Date of filing: 13.12.2024
(51) Int. Cl.: H04B 10/077, H04B 10/079, H04B 10/278, H04J 14/02

(54) **A SELF-OPTIMIZING FIBER-OPTICAL TRANSMISSION SYSTEM**

(71) Applicant: Deutsche Telekom AG, 53113 Bonn (DE)
(72) Inventor: SCHRAUB, Stefan, 61239 Ober-Mörlen (DE); NÖCKEL, Philipp, 53721 Siegburg (DE)
(74) Representative: RDL Patentanwälte PartG mbB

(57) **Abstract**

A method for operating a fiber-optical line system, wherein a first transceiver of the fiber-optical line system transmits light signals via a fiber-optical line of the fiber-optical line system to a second transceiver of the fiber-optical line system, the first transceiver and the second transceiver respectively connected to opposite free ends of the fiber-optical line and the fiber-optical line comprising a plurality of separate optical cables and a plurality of in-line erbium-doted fiber amplifiers, EDFA, interconnecting the separate optical cables; an orchestration system for a fiber-optical line system, a fiber-optic transmission system and a computer program product.

## Description

The invention relates to a method for operating a fiber-optical line system, wherein a first transceiver of the fiber-optical line system transmits light signals via a fiber-optical line of the fiber-optical line system to a second transceiver of the fiber-optical line system, the first transceiver and the second transceiver respectively connected to opposite ends of the fiber-optical line and the fiber-optical line comprising a plurality of separate optical cables and a plurality of in-line erbium-doted fiber amplifiers, EDFA, interconnecting the separate optical cables. The invention further relates to an orchestration system for a fiber-optical line system, a fiber-optical transmission system and a computer program product.

An optical cable inevitably attenuates a light signal propagating through the optical cable, e.g., due to a stray light loss. The attenuation is usually defined as a ratio of an input power over an output power and indicated in dB. A lower dB value corresponds to a lower attenuation while a higher dB value corresponds to a higher attenuation. The stray light loss linearly depends on a length of the optical cable and, hence, may be readily calculated multiplying an attenuation coefficient of the optical cable by the length of the optical cable. The attenuation coefficient may exemplarily be 0.2 dB/km.

As a consequence, a length of the optical cable allowing for the light signal being properly, i.e., precisely transmitted is limited. The resulting maximum length of the optical cable is called a span, the span obviously also depending on an original strength of the light signal, i.e., a transmission, TX, power of the first transceiver. Of course, the TX power of the first transceiver is limited as well.

Thus, in order to provide a fiber-optical line having a substantially larger total span than a single optical cable, a plurality of separate optical cables are concatenated by means of in-line amplifiers interconnecting successive optical cables. The in-line amplifiers are configured for receiving an attenuated weak light signal and transmitting an amplified strong light signal, the strong light signal carrying the exact information carried by the weak light signal. An amplification factor of the in-line amplifier is usually referred to as a gain and also indicated in dB.

However, even concatenating separate optical cables by means of in-line amplifiers is limited due to a noise increasing along the fiber-optical line. The noise is introduced particularly by the in-line amplifiers. The noise significantly reduces a quality, i.e., a precision of a light signal transmitted by the fiber-optical line. The quality of the light signal is usually indicated by a Q value which may be determined dependent on operational parameters of the fiber-optical line system, e.g., a weighted sum of SNR, OSNR, FEC values and the like (see below). The Q value may exemplarily be in a range from 0 to 10 wherein 0 indicates a worst quality and 10 indicates an optimal quality.

While so-called Raman in-line amplifiers effectively prevent the noise from increasing along the fiber-optical line, regulations require erbium-doted fiber amplifiers, EDFA, to be used in fiber-optical lines. EDFAs do not sufficiently suppress the noise for preventing the noise from increasing noise along the fiber-optical line.

It is, therefore, an object of the invention to suggest a method for operating a fiber-optical line which allows for a larger span of the fiber-optical line and, at the same time, an optimal quality of transmitted light signals even with EDFAs interconnecting the optical cables of the fiber-optical line. Further objects of the invention are to provide an orchestration system for a fiber-optical line system, a fiber-optical transmission system and a computer program product.

A first aspect of the invention is a method for operating a fiber-optical line system, wherein a first transceiver of the fiber-optical line system transmits light signals via a fiber-optical line of the fiber-optical line system to a second transceiver of the fiber-optical line system, the first transceiver and the second transceiver respectively connected to opposite ends of the fiber-optical line and the fiber-optical line comprising a plurality of separate optical cables and a plurality of in-line erbium-doted fiber amplifiers, EDFA, interconnecting the separate optical cables. The fiber-optical line system comprises all components required for optically transmitting data from the first transceiver to the second transceiver. The required components comprise the first transceiver, the second transceiver, the optical cables and the in-line EDFAs. The light signal transmitted by the first transceiver successively propagates through the cables, is amplified by each inline-EDFAs and is finally received by the second transceiver. Transmitting light signals via the fiber-optical line may be referred to as a normal operational mode of the fiber-optical line system.

It is noted that the attributes "first" and "second" are chosen arbitrarily and just for distinction. Of course, the second transceiver may as well transmit light signals via the fiber-optical line to the first transceiver.

According to the invention, an orchestration system logically connected to the fiber-optical line system receives property parameters of the optical cables and respective operational parameters from the first transceiver, the second transceiver and each in-line EDFA, automatically determines optimized operational parameters for the first transceiver and each in-line EDFA and automatically configures the first transceiver and each in-line EDFA by applying the determined optimized operational parameters. The logical connection of the orchestration system to the fiber-optical line system may be physically established in-bound, i.e., via the fiber-optical line system and/or out-bound, i.e., via separate cables, particularly electric cables, connecting each component of the fiber-optical line system to the orchestration system. The parameters may be pushed to the orchestration system or pulled by the orchestration system.

The property parameters of the optical cables which are also referred to as span parameters are static, i.e., constant and may include respective attenuation coefficients and lengths of the cables.

The operational parameters of the first transceiver and the second transceiver comprise a forward error correction, FEC, a signal noise ratio, SNR, an optical signal noise ratio, OSNR, a polarization mode dispersion, PMD, a chromatic dispersion, CD, a transmission, TX, power, a transmitted signal power, a reception, RX, power, a received signal power, a differential group delay, DGD, a Q value and the like.

The operational parameters of the in-line EDFAs may comprise a gain mode, an amplification range, a current gain, a current tilt, a current variable optical attenuator, VOA, input or output value and the like. The gain mode may comprise a fixed gain mode and a control power mode. In the gain mode, an amplification factor of the in-line EDFA is constant while, in the control power mode, a TX power of the in-line EDFA is constant. The tilt specifies a dependency of the gain on a frequency of the light.

The listed properties are exemplarily only, i.e., the invention is not limited by the listed properties.

Receiving the property parameters and the operational parameters may form part of an initialization phase of the method. The initialization phase may further comprise initializing runtime variables for determining the optimized operational parameters. The runtime variables may define a step width for varying values of other variables. Of course, parameter variables may be initialized by letting them be the received parameters.

The optimized operational parameters allow for a longer span of the fiber-optical line and cause a high power of the transmitted light signal, ideally an output power of 0 dB, and a high quality of the transmitted light signal, ideally a Q value of 10. Particularly, an amplified spontaneous emission, ASE, in the fiber-optical line is optimally exploited. Moreover, a gradual laser degradation of the first transceiver is adequately compensated.

Apart from that, an energy consumption of the fiber-optical line system isreduced and a lifetime of the fiber-optical line system is increased. Due to the automatic activity of the orchestration system the fiber-optical transmission system comprises the fiber-optical line system and the orchestration system is self-optimizing.

Preferably, determining the optimized operational parameters comprises simulating an operation of the fiber-optical line based on the transmitted operational parameters, varying the operational parameters and selecting as the optimized operational parameters the varied operational parameters causing an optimal simulated light signal being received by the second transceiver of the simulated fiber-optical line system. The simulation is based on a model of the fiber-optical line system, i.e., a virtualized fiber-optical line system. The model depends on the property parameters and the operational parameters and is initially parametrized with the transmitted property parameters and operational parameters. The optimized operational parameters eventually result from an optimization problem solved by the orchestration system. This method step may be referred to as an optimization phase.

During the optimization phase operational parameters of each of the first transceiver and in-line EDFA are independently varied. The optimization phase intends to maximize a Q value and/or an output power of the fiber-optical line, i.e., an optimal quality of the light signals received by the second transceiver.

Determining the optimized operational parameters may comprise identifying an in-line EDFA relevant for the operation of the fiber-optical line and varying the operational parameters of the identified in-line EDFA using a small step width. This method step may be referred to as an adjustment phase. The adjustment phase may follow the optimization phase and provides a fine tuning of the fiber-optical line system.

Simulating the operation of the fiber-optical line may comprise modeling the fiber-optical line system using an additive Gaussian white noise, AWGN, model. The AWGN model provides the modeled, i.e., virtualized fiber-optical line system with a noise having a uniform power spectral density across a band of relevant frequencies. An amplitude of the added noise is normally distributed, i.e., is met by the Gauss distribution.

In an embodiment, an artificial neural network of the orchestration system simulates the operation. The artificial neural network allows for simulating the fiber-optical line system very precisely and efficiently. Apart from that, the artificial neural network may dynamically improve a capability of simulation, i.e., to gradually adapt an implicit virtual model of the fiber-optical line system to the real fiber-optical line system.

Preferably, the orchestration system learns simulating the operation of the fiber-optical line system by training with historic data and by comparing the determined optimized operational parameters with operational parameters received after configuring the fiber-optical line system. The orchestration system may be caused to learn in case a difference of the received operational parameters from the determined optimized operational parameters exceeds a predetermined threshold. This method step may be referred to as a training phase. The training phase allows for a steadily improving the simulation of the fiber-optical line system.

The orchestration system may store the received operational parameters and the determined optimized operational parameters as historic operation data. The historic data may be used for documenting the automatic configuration and for training the artificial neural network.

Favorably, the orchestration system receives the property parameters and the operational parameters during a determined time interval and configures the first transceiver and the in-line EDFAs during the determined time interval. The time interval may be determined during night, particularly between 3 am and 4 am. During the night a load of the fiber-optical line system is relatively low which possibly prevents the normal operation of the fiber-optical line system from being adversely affected by the automatic configuration.

The operational parameters of the first transceiver comprises advantageously a degree of laser degradation. Each transceiver comprises a laser device generating the light for transmitting light signals. A quality of the laser device gradually decreases due to a continuous normal operation of the laser device. For instance, a transmission, TX, power of the laser device gradually decreases. The transmitted degree of laser degradation allows the orchestration system for taking into account an aging of the first transceiver. Further operational parameters of the first transceiver are listed above.

The operational parameters of each in-line EDFA comprise a gain mode of the in-line EDFA selected from a fixed gain mode and a control power mode. In case the in-line EDFA supports both the fixed gain mode and the control power mode, simulating the fiber-optical line system may comprise changing the gain mode of the in-line EDFA. For an in-line EDFA in the fixed gain mode, a gain, a tilt, a VOA in and a VOA out may be varied during simulation. For an in-line EDFA in the control power mode, an output power, a tilt, a VOA in and a VOA out may be varied during simulation. Further operational parameters of each in-line EDFA are listed above.

A dense wavelength division multiplexing, DWDM, line system is preferably operated as the fiber-optical line system, the fiber-optical line system comprising a first wavelength multiplexer and a second wavelength multiplexer and the transmitted light signals having a plurality of different frequencies. The DWDM line system supports practically simultaneous and independent signal transmissions using different frequencies, i.e., colors of the light bearing the signal. Of course, the fiber-optical line system is simulated and optimized for each frequency.

A desktop application, a server application, a network service orchestrator, NSO, a network monitoring station, NMS, may participate in the method as the orchestration system. The orchestration system may be executed on different computing devices. A computing device executing the orchestration system may be a special dedicated computing device or a readily available computing device, i.e., an existing node of a communication network, the computing device hosting the orchestration system as an additional function.

It is an essential advantage of the inventive method that the method allows for a larger span of a fiber-optical line and causes a high power and quality of transmitted light signals even with EDFAs interconnecting the optical cables of the fiber-optical line. Furthermore, the method allows for reducing an energy consumption of the fiber-optical line and increases a lifetime of the fiber-optical line.

It shall be understood that the features described previously and to be described subsequently may be used not only in the indicated combinations but also in different combinations or on their own without leaving the scope of the present invention.

The invention is described in detail by means of exemplary embodiments and with reference to the accompanying drawings. Like components are indicated by like reference numerals throughout the drawings. Therein:

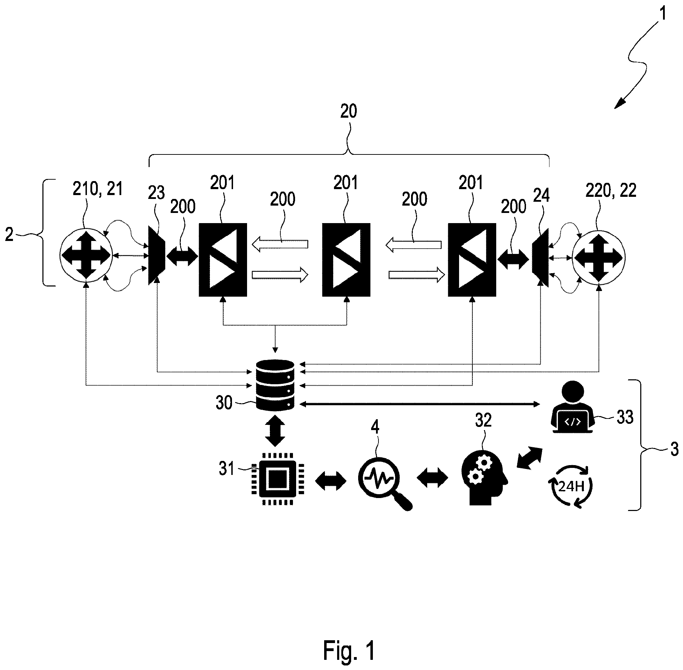

- Fig. 1: schematically shows components of a fiber-optical transmission system according to an embodiment of the invention.

Fig. 1 schematically shows components of a fiber-optical transmission system 1 according to an embodiment of the invention. The fiber-optical transmission system 1 comprises a fiber-optical line system 2. The fiber-optical line system 2 comprises a first transceiver 210, a second transceiver 220 and a fiber-optical line 20 linking the first transceiver 210 and the second transceiver 220, the first transceiver 210 and the second transceiver 220 connected to opposite ends of the fiber-optical line 20.

The fiber-optical line 20 comprises a plurality of optical cables 200 and a plurality of in-line erbium-doted fiber amplifiers, EDFA, 201 interconnecting the separate optical cables 200. The first transceiver 210 may be comprised by a first router 21. The second transceiver 220 may be comprised by a second router 22.

The fiber-optical line system 2 may further comprise a first wavelength multiplexer 23 and a second wavelength multiplexer 24, the first wavelength multiplexer 23 connecting the first transceiver 21 to an optical cable 200 of the fiber-optical liane 20 and the second wavelength multiplexer 24 connecting the second optical transceiver 22 to an optical cabel 200 of the fiber-optical line 20.

The fiber-optical transmission system 1 further comprises an orchestration system 3 according to the invention for the fiber-optical line system 2. The orchestration system 3 may comprise a storage unit 30, a central processing unit, CPU, 31, a processor for short, an artificial neural network 32 and a human machine interface, HMI, 33.

The orchestration system 3 may be implemented by means of a computer program product. The computer program product comprises a digital storage medium storing a program code. The stored program code causes a computing device to carry out a method according to an embodiment of the invention as the orchestration system 3 when being executed by a processor of the computing device.

The fiber-optical transmission system 1 is configured for carrying out the following method for operating the fiber-optical line system 2. Preferably a dense wavelength division multiplexing, DWDM, line system is operated as the fiber-optical line system 2, the fiber-optical line system 2 comprising the first wavelength multiplexer 23 and the second wavelength multiplexer 24 and the transmitted light signals having a plurality of different frequencies.

The first transceiver 210 of the fiber-optical line system 2 transmits light signals via the fiber-optical line 20 of the fiber-optical line system 2 to the second transceiver 220 of the fiber-optical line system 2, the first transceiver 210 and the second transceiver 220 respectively connected to opposite ends of the fiber-optical line 20 and the fiber-optical line 20 comprising a plurality of separate optical cables 200 and a plurality of in-line erbium-doted fiber amplifiers, EDFA, (201) interconnecting the separate optical cables 200.

The orchestration system 3 logically connected to the fiber-optical line system 2 receives property parameters of the optical cables 200 and respective operational parameters from the first transceiver 210, the second transceiver 220 and each in-line EDFA 201. The operational parameters of the first transceiver 210 may comprise a degree of laser degradation. The operational parameters of each in-line EDFA 201 may comprise a gain mode of the in-line EDFA 201 selected from a fixed gain mode and a control power mode.

A desktop application, a server application, a network service orchestrator, NSO, a network monitoring station, NMS, may participate in the method as the orchestration system 3.

The orchestration system 3 advantageously receives the property parameters and the operational parameters during a determined time interval and configures the first transceiver 210 and the in-line EDFAs 201 during the determined time interval, the time interval exemplarily being determined from 3 am to 4 am.

The orchestration system 3 automatically determines optimized operational parameters for the first transceiver 210 and each in-line EDFA 201. Determining the optimized operational parameters may comprise simulating an operation of the fiber-optical line 20 based on the transmitted operational parameters, varying the operational parameters and selecting as the optimized operational parameters the varied operational parameters causing an optimal simulated light signal being received by the second transceiver 220 of the simulated fiber-optical line system 2. Simulating the operation of the fiber-optical line 20 favorably comprises modeling the fiber-optical line system 2 using an additive Gaussian white noise, AWGN, model. The artificial neural network 32 of the orchestration system 3 may simulate the operation.

Determining the optimized operational parameters may further comprise identifying an in-line EDFA 201 relevant for the operation of the fiber-optical line 20 and varying the operational parameters of the identified in-line EDFA 201 using a small step witdh.

The orchestration system 3 favorably learns simulating the operation of the fiber-optical line system 2 by training with historic operation data and by comparing 4 the determined optimized operational parameters with operational parameters received after configuring the fiber-optical line system 2.

The orchestration system 3 may store the received operational parameters and the determined optimized operational parameters as historic operation data.

The orchestration system 3 automatically configures the first transceiver 210 and each in-line EDFA 201 by applying the determined optimized operational parameters.

### Reference Numerals

- 1: fiber-optical transmission system
- 2: fiber-optical line system
- 20: fiber-optical line
- 200: optical cable
- 201: in-line erbium-doted fiber amplifier, EDFA
- 21: first router
- 210: first transceiver
- 22: second router
- 220: second transceiver
- 23: first wavelength multiplexer
- 24: second wavelength multiplexer
- 3: orchestration system
- 30: storage unit
- 31: central processing unit, CPU
- 32: artificial neural network
- 33: human-machine-interface, HMI
- 4: comparing

## Claims

1. A method for operating a fiber-optical line system (2), wherein
- a first transceiver (210) of the fiber-optical line system (2) transmits light signals via a fiber-optical line (20) of the fiber-optical line system (2) to a second transceiver (220) of the fiber-optical line system (2), the first transceiver (210) and the second transceiver (220) respectively connected to opposite ends of the fiber-optical line (20) and the fiber-optical line (20) comprising a plurality of separate optical cables (200) and a plurality of in-line erbium-doted fiber amplifiers, EDFA, (201) interconnecting the separate optical cables (200);
- an orchestration system (3) logically connected to the fiber-optical line system (2) receives property parameters of the optical cables (200) and respective operational parameters from the first transceiver (210), the second transceiver (220) and each in-line EDFA (201);
- the orchestration system (3) automatically determines optimized operational parameters for the first transceiver (210) and each in-line EDFA (201) and automatically configures the first transceiver (210) and each in-line EDFA (201) by applying the determined optimized operational parameters.

2. The method according to claim 1, wherein determining the optimized operational parameters comprises simulating an operation of the fiber-optical line (20) based on the transmitted operational parameters, varying the operational parameters and selecting as the optimized operational parameters the varied operational parameters causing an optimal simulated light signal being received by the second transceiver (220) of the simulated fiber-optical line system (2).

3. The method according to claim 1 or 2, wherein determining the optimized operational parameters comprises identifiying an in-line EDFA (201) relevant for the operation of the fiber-optical line (20) and varying the operational parameters of the identified in-line EDFA (201) using a small step witdh.

4. The method according to claim 2 or 3, wherein simulating the operation of the fiber-optical line (20) comprises modeling the fiber-optical line system (2) using an additive Gaussian white noise, AWGN, model.

5. The method according to one of claims 2 to 4, wherein an artificial neural network of the orchestration system (3) simulates the operation.

6. The method according to claim 5, wherein the orchestration system (3) learns simulating the operation of the fiber-optical line system (2) by training with historic operation data and by comparing the determined optimized operational parameters with operational parameters received after configuring the fiber-optical line system (2).

7. The method according to one of claims 1 to 6, wherein the orchestration system (3) stores the received operational parameters and the determined optimized operational parameters as historic operation data.

8. The method according to one of claims 1 to 7, wherein the orchestration system (3) receives the property parameters and the operational parameters during a determined time interval and configures the first transceiver (210) and the in-line EDFAs (201) during the determined time interval.

9. The method according to one of claims 1 to 8, wherein the operational parameters of the first transceiver (210) comprise a degree of laser degradation.

10. The method according to one of claims 1 to 9, wherein the operational parameters of each in-line EDFA (201) comprise a gain mode of the in-line ED-FA (201) selected from a fixed gain mode and a control power mode.

11. The method according to one of claims 1 to 10, wherein a dense wavelength division multiplexing, DWDM, line system is operated as the fiber-optical line system (2), the fiber-optical line system (2) comprising a first wavelength multiplexer (23) and a second wavelength multiplexer (24) and the transmitted light signals having a plurality of different frequencies.

12. The method according to one of claims 1 to 11, wherein a desktop application, a server application, a network service orchestrator, NSO, a network monitoring station, NMS, participate in the method as the orchestration system (3).

13. A fiber-optical transmission system (1), comprising a fiber-optical line system (2) with a first transceiver (210), a second transceiver (220) and a fiber-optical line (20) linking the first transceiver (210) and the second transceiver (220), the fiber-optical line (20) comprising a plurality of separate optical cables (200) and a plurality of in-line erbium-doted fiber amplifiers, EDFA, (201) interconnecting the separate optical cables (200), and an orchestration system (3) for the fiber optical line system (2), the fiber-optical transmission system (1) configured for carrying out a method according to one of claims 1 to 12.

14. An orchestration system (3) for a fiber-optical line system (2), comprising a storage unit (30) for storing operational parameters received from components of a fiber-optical line system (2) and an artifical neural network (32) for simulating the fiber-optical line system (2).

15. A computer program product, comprising a digital storage medium storing a program code, the stored program code causing a computing device to carry out a method according to one of claims 1 to 12 as the orchestration system (3) when being executed by a processor of the computing device.
